# EUROPEAN PATENT APPLICATION

(11) **EP 4 071 759 A1**
(43) Date of publication of application: **12.10.2022**
(21) Application number: 22162333.3
(22) Date of filing: 15.03.2022
(51) Int. Cl.: G11B 5/55, G11B 11/105

(54) **DATA STORAGE DEVICE LINEAR ACTUATOR**

(30) Priority: 06.04.2021 US 202117223447
(71) Applicant: Seagate Technology LLC, Fremont, CA 94538 (US)
(72) Inventor: Subramanian, Krishnan, Fremont, 94538 (US); Herdendorf, Brett R., Fremont, 94538 (US); Mendonsa, Riyan Alex, Fremont, 94538 (US)
(74) Representative: Beck Greener LLP

(57) **Abstract**

A data storage device, and systems thereof, including an actuator arm extending along an actuator axis and one or more rails extending along a rail axis. The rail axis is at an angle to the actuator arm and the actuator arm is movably attached to the one or more rails such that the actuator arm is restricted to linear motion along the one or more rails. Further, the device includes a linear motor positioned adjacent to the actuator arm and adapted to move the actuator arm. In one or more embodiments, the device includes a first actuator arm and a second actuator arm having the distal ends of each connected with at least one head located proximate the connection point.

## Description

The disclosure herein relates to a linear actuator assembly for a data storage devices including rotating recording mediums.

According to an aspect of the present invention, there is provided an apparatus comprising an actuator arm extending along an actuator axis between a proximal end and a distal end; one or more rails extending along a rail axis between a first end and a second end, wherein the rail axis is at an angle to the actuator axis, wherein the actuator arm is movably attached to the one or more rails such that the actuator arm is restricted to linear motion along the one or more rails; and a linear motor positioned adjacent to the actuator arm and adapted to move the actuator arm.

In embodiments, the one or more rails comprise a first rail and a second rail, wherein the actuator arm is positioned between the first and second rails. In embodiments, the linear motor comprises a linear stepper motor, or an inchworm motor, or a linear voice coil motor. In embodiments, the apparatus further comprises a bellows covering the one or more rails and adapted to provide a seal of the one or more rails as the actuator arm moves along the one or more rails.

According to another aspect of the present invention, there is provided a system comprising a drive base; a spindle attached to the drive base; a recording medium rotatably coupled to the spindle; an actuator arm extending along an actuator axis between a proximal end and a distal end, the actuator arm comprising at least one head for reading and writing data from and to the recording medium; one or more rails extending along a rail axis between a first end and a second end, wherein the rail axis is at an angle to the actuator axis, wherein the actuator arm is movably attached to the one or more rails such that the actuator arm is restricted to linear motion along the one or more rails; and a linear motor positioned adjacent to the actuator arm and adapted to move the actuator arm.

In embodiments, the at least one head is adapted to move along a radial line relative to the recording medium. In embodiments, the one or more rails comprise a first rail and a second rail, wherein the actuator arm is positioned between the first and second rails. In embodiments, the linear motor comprises a linear stepper motor, or an inchworm motor, or a linear voice coil motor.

According to yet another aspect of the present invention, there is provided an apparatus comprising a first actuator arm extending along a first actuator axis between a proximal end and a distal end; a second actuator arm extending along a second actuator axis between a proximal end and a distal end, wherein the distal end of the first actuator arm is connected to the distal end of the second actuator arm; at least one head located proximate the distal ends of each of the first and second actuator, the at least one head adapted to read and write data from and to a recording medium; and a linear motor associated with each of the first and second actuator arms and positioned adjacent to the proximal end of the respective actuator arm and adapted to move the respective actuator arm, wherein each of the first and second actuator arms comprise a base located proximate the proximal end and adapted to interact with the respective linear motor, and a suspension extending between the base and the at least one head, wherein the suspension defines a thickness of less than 1 millimeter.

In embodiments, the apparatus further comprises one or more rails associated with each of the first and second actuator arms, wherein each of the one or more rails extends along a rail axis between a first end and a second end, wherein the rail axis is at an angle to the respective actuator axis, wherein the respective actuator arm is movably attached to the corresponding one or more rails such that the actuator arm is restricted to linear motion along the one or more rails. In embodiments, the first and second actuator axes are positioned at an angle to one another. In embodiments, the first and second actuator axes are parallel to one another. In embodiments, the one or more rails comprise a first rail and a second rail, wherein the actuator arm is positioned between the first and second rails. In embodiments, the linear motor comprises a linear stepper motor, or an inchworm motor, or a linear voice coil motor.

An illustrative apparatus may include an actuator arm extending along an actuator axis between a proximal end and a distal end. The apparatus may also include one or more rails extending along a rail axis between a first end and a second end. The rail axis may be at an angle to the actuator axis. The actuator arm may be movably attached to the one or more rails such that the actuator arm may be restricted to linear motion along the one or more rails. The apparatus may also include a linear motor positioned adjacent to the actuator arm and adapted to move the actuator arm.

An illustrative system may include a drive base, a spindle attached to the drive base, and a recording medium rotatably coupled to the spindle. The system may also include an actuator arm extending along an actuator axis between a proximal end and a distal end. The actuator arm may include at least one head for reading and writing data from and to the recording medium. Further, the system may include one or more rails extending along a rail axis between a first end and a second end. The rail axis may be at an angle to the actuator axis. The actuator arm may be movably attached to the one or more rails such that the actuator arm may be restricted to linear motion along the one or more rails. The system may also include a linear motor positioned adjacent to the actuator arm and adapted to move the actuator arm.

An illustrative apparatus may include a first actuator arm extending along a first actuator axis between a proximal end and a distal end. The apparatus may also include a second actuator arm extending along a second actuator axis between a proximal end and a distal end. The distal end of the first actuator arm may be connected to the distal end of the second actuator arm. Further, the apparatus may include at least one head located proximate the distal ends of each of the first and second actuator. The at least one head may be adapted to read and write data from and to a recording medium. The apparatus may include a linear motor associated with each of the first and second actuator arms and positioned adjacent to the proximal end of the respective actuator arm and adapted to move the respective actuator arm. Each of the first and second actuator arms may include a base located proximate the proximal end and adapted to interact with the respective linear motor. Each of the first and second actuator arms may also include a suspension extending between the base and the at least one head. The suspension may define a thickness of less than 1 millimeter.

The above summary is not intended to describe each embodiment or every implementation of the present disclosure. A more complete understanding will become apparent and appreciated by referring to the following detailed description and claims taken in conjunction with the accompanying drawings. In other words, these and various other features and advantages will be apparent from a reading of the following detailed description.

The disclosure may be more completely understood in consideration of the following detailed description of various embodiments of the disclosure in connection with the accompanying drawings.
FIG. 1A is a top view of a linear actuator assembly.
FIG. 1B is a perspective view of the linear actuator assembly of FIG. 1A.
FIG. 2 is an expanded perspective view of the linear actuator assembly of FIG. 1B.
FIG. 3 is an isolated rear view of an actuator arm and a portion of a linear stepper motor of the linear actuator assembly.
FIG. 4 is a perspective view of an inchworm motor of a linear actuator assembly.
FIG. 5 is a perspective view of a linear actuator assembly including a linear voice coil motor.
FIG. 6A is a perspective view of a linear actuator assembly including bellows.
FIG. 6B is another isolated rear view of an actuator arm and contamination confining magnets.
FIG. 7A is a schematic top view of a dual linear actuator assembly having actuator arms at a right angle to a rail axis.
FIG. 7B is a schematic side view of the dual linear actuator assembly of FIG. 7A.
FIG. 8A is a schematic top view of a dual linear actuator assembly having actuator arms at an acute angle to a rail axis.
FIG. 8B is a schematic side view of the dual linear actuator assembly of FIG. 8A.
FIG. 9A is a schematic top view of a pair of dual linear actuator assemblies.
FIG. 9B is a schematic side view of the pair of dual linear actuator assemblies of FIG. 9A.

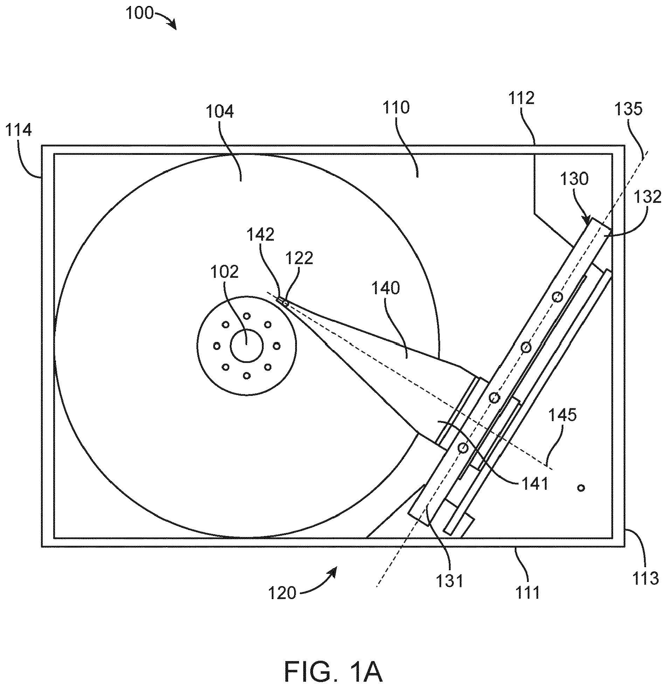

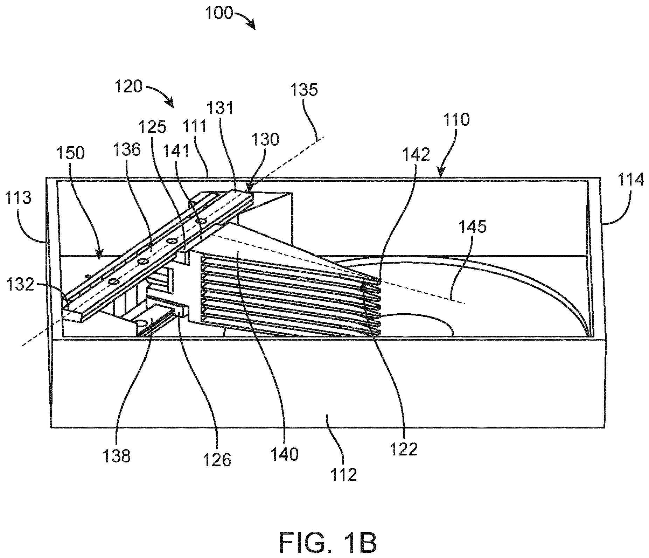

Exemplary systems, apparatus, and methods shall be described with reference to FIGS. 1-9. It will be apparent to one skilled in the art that elements or processes from one embodiment may be used in combination with elements or processes of the other embodiments, and that the possible embodiments of such systems, apparatus, and methods using combinations of features set forth herein is not limited to the specific embodiments shown in the figures and/or described herein. Further, it will be recognized that the size and shape of various elements herein may be modified but still fall within the scope of the present disclosure, although certain one or more shapes and/or sizes, or types of elements, may be advantageous over others.

The present disclosure relates to a linear actuator for a data storage device. One way to improve areal density of a data storage device is to have a slider or head assembly with zero skew (or fixed skew) throughout the entire stroke of the slider or head assembly. For example, by configuring the slider to have zero skew throughout the entire stroke of the slider, the slider may be able to read data immediately after writing the data. In a skewed configuration, the angle of the slider relative to the data track (e.g., the stroke extending along an arc) may not allow for this immediate reading after writing. A slider using a linear actuator to move the slider linearly through the stroke may help to accomplish this task. For example, in a zero skew configuration, the read and/or write pole may be nominally normal to a centerline of the track and, in a fixed skew configuration, the read and/or write pole may be at a fixed angle that is nominally non-normal to the centerline of the track.

However, the linear actuator may also present some undesirable characteristics. For example, the linear actuator may encounter inertia issues, lower speed, and/or increased noise (e.g., relative to a pivoting actuator). Previously, these characteristics were undesirable because the trade-off of increased reliability and areal density (e.g., due to the zero skew) was not worth the potential decrease in performance (e.g., due to inertia, lower speed, and increased noise). As other types of storage become faster at reading and writing (e.g., solid state drives), data storage devices including rotating recording mediums have started to focus on improving areal density, even if it comes as a trade-off to higher performance. In other words, performance or speed may be reduced in an attempt to further improve areal density through increased reliability (e.g., by having zero skew throughout the entire stroke). As such, the data storage device having a linear actuator may act as an archival type of storage by providing an increase in dollar per terabyte as compared to a traditional pivoting actuator (i.e., these data storage devices may be used in a storage server for the cloud).

Additionally, by providing linear movement of the actuator, two actuators may be used in combination. For example, the head assemblies of the two actuators may be connected at each of the distal ends and the read/write heads may be located at the intersection (e.g., which is different than a drive having multiple independent actuators not connected at the distal ends). As a result, the thickness of the actuator (e.g., suspension of the actuator) may be reduced significantly. For example, with a typical actuator, a read/write head may be located on a cantilevered end of the head assembly and, therefore, the suspension of the actuator may need to be thick enough to support the weight of the actuator and the read/write head. However, because the read/write head may be supported by two separate actuators in this embodiment, the suspension of each actuator may be thinner. In other words, the read/write head may be supported at two points (e.g., a base end of each actuator). By providing a thinner suspension (e.g., relative to typical actuators that are cantilevered), the spacing between recording disks may be reduced and the resistance (e.g., air resistance) encountered by the actuators during operation may be reduced. Further, the two actuator configuration may also provide increased stiffness such that the suspension may be more robust to shock events. In one or more embodiments, the actuators may be different or the same (e.g., type, size, etc.) due to the actuators working together. For example, one of the actuators may be smaller than the other but still provide similar performance. Further yet, active control of head media spacing may be achieved at the suspension due to the two actuators combined at the distal ends.

Reference will now be made to the drawings, which depict one or more aspects described in this disclosure. However, it will be understood that other aspects not depicted in the drawings fall within the scope and spirit of this disclosure. Like numbers used in the figures refer to like components, elements, portions, regions, openings, apertures, and the like. However, it will be understood that the use of a reference character to refer to an element in a given figure is not intended to limit the element in another figure labeled with the same reference character.

FIGS. 1A and 1B illustrate an exemplary system 100 (e.g., a data storage device) including a linear actuator assembly 120. The system 100 may include any suitable type of data storage device including a plurality of rotating recording disks. For example, the data storage device 100 may define any form factor, capacity size, and/or interface connection. Further, the linear actuator assembly 120 may fit within the form factor of the data storage device 100 without modifying the physical dimensions of the data storage device 100. In other words, the data storage device 100 including the linear actuator assembly 120 may be physically interchangeable with any other data storage device of the same form factor.

The data storage device 100 may include a drive base 110, a spindle 102 attached to the drive base 110, and a recording medium 104 rotatably coupled to the spindle 102. The spindle 102 and the recording medium 104 may be any suitable spindle and medium as is known in the art. The drive base 110 may define a first side 111 and a second side 112 opposite the first side 111 (e.g., such that drive components of the data storage device 100 are located between the first and second sides 111, 112). Further, the drive base 110 may define a third side 113 and a fourth side 114 extending between the first and second sides 111, 112. In other words, the four sides may combine to define a rectangular box that may form the physical boundaries of the data storage device 100.

The linear actuator assembly 120 of the data storage device 100 may include one or more rails 130. For example, the one or more rails 130 may extend along a rail axis 135 between a first end 131 and a second end 132. As shown in FIGS. 1A and 1B, the one or more rails 130 may extend between two adjacent sides of the data storage device 130. For example, the first end 131 of the one or more rails 130 may be positioned (e.g., coupled) proximate the first side 111 of the drive base 110 and the second end 132 of the one or more rails 130 may be positioned (e.g., coupled) proximate the third side 113 of the drive base 110. In other embodiments, the one or more rails 130 may extend along one of the sides of the drive base 110 (e.g., the rail axis 135 extending parallel to the side). It is noted that the one or more rails 130 may be directly coupled (e.g., directly contacting) to sides of the drive base 110 or coupled to the sides/bottom of the drive base 110 through a mounting bracket.

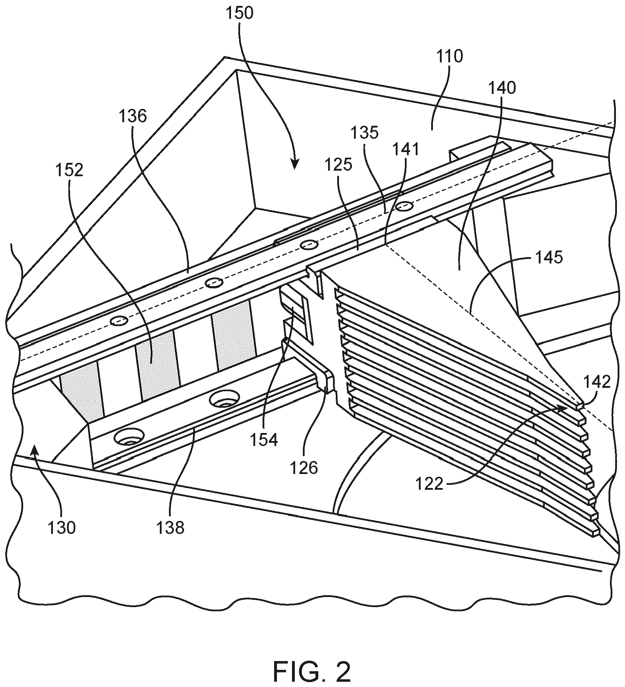

In one or more embodiments, the one or more rails 130 may include a first rail 136 and a second rail 138 (e.g., as shown in FIGS. 1B and 2). The first and second rails 136, 138 may be arranged such that an actuator arm 140 (e.g., as discussed herein) may be positioned therebetween. The first and second rails 136, 138 may extend parallel to one another and spaced apart by a distance of greater than or equal to about 8 millimeters, greater than or equal to about 12 millimeters, greater than or equal to about 16 millimeters, etc. and/or less than or equal to about 28 millimeters, less than or equal to about 24 millimeters, less than or equal to about 20 millimeters. In some embodiments, the one or more rails 130 may only include a single rail upon which the actuator arm 140 is movably positioned. The one or more rails 130 may define any suitable cross-sectional shape. For example, the one or more rails 130 may define a cross-sectional shape of square, rectangular, circular, oval, etc. Further, the one or more rails 130 may include (e.g., be formed of) any suitable material. For example, the one or more rails 130 may include (e.g., be formed of) stainless steel, titanium, etc.

The linear actuator assembly 120 may also include an actuator arm 140 extending along an actuator axis 145 between a proximal end 141 and a distal end 142. The actuator arm 140 may include at least one head 122 for reading and writing data from and to the recording medium 104. The at least one head 122 may be located proximate the distal end 142 of the actuator arm 140. Further, the actuator arm 140 may be movably attached to the one or more rails 130 proximate the proximal end 141 of the actuator arm 140. The actuator arm 140 may be movably attached to the one or more rails 130 such that the actuator arm 140 may be restricted to linear motion along the one or more rails 130. In other words, the actuator arm 140 may be movably attached to the one or more rails 130 so that the actuator arm 140 moves linearly and, therefore, the at least one head 122 also moves linearly relative to the recording medium 104.

The actuator arm 140 may be movably coupled to the one or more rails 130 in any suitable way. For example, the actuator arm 140 may include one or more sliding brackets (e.g., corresponding to the one or more rails 130) proximate the proximal end 141 of the actuator arm 140 to movably attach the actuator arm 140 to the one or more rails 130. Specifically, as shown in FIG. 2, the actuator arm 140 may include a first sliding bracket 125 movably attached to the first rail 136 and a second sliding bracket 126 movably attached to the second rail 138. However, in one or more embodiments, the system 100 may include any number of rails and sliding brackets movably attaching the actuator arm 140 to the one or more rails 130.

Further, the actuator arm 140 may be movably coupled to the one or more rails 130 in such a way as to stabilize the actuator arm 140 as it moves linearly along the one or more rails 130. In other words, the actuator arm 140 is prevented from moving in other rotational or directional ways (e.g., other than linearly along the one or more rails 130). Also, the actuator axis 145 may be oriented at an angle relative to the rail axis 135. For example, as shown in FIG. 1A, the actuator axis 145 is about 90 degrees relative to the rail axis 135. Because of the orientation of the actuator arm 140 relative to the recording medium 104 and the orientation of the rail axis 135, the at least one head 122 is adapted to move along a radial line relative to the recording medium 104. In other words, the stroke of the at least one head 122 extends through a radial line and has zero skew (e.g., a straight line).

The linear actuator assembly 120 of the data storage device 100 may also include a linear motor 150 adapted to move the actuator arm 140 relative to the one or more rails 130. The linear motor 150 may include any suitable type of motor that moves the actuator arm 140 linearly along the one or more rails 130. For example, the linear motor 150 may include a linear stepper motor, an inchworm motor, a linear voice coil motor, ball screw and gear motor, etc.

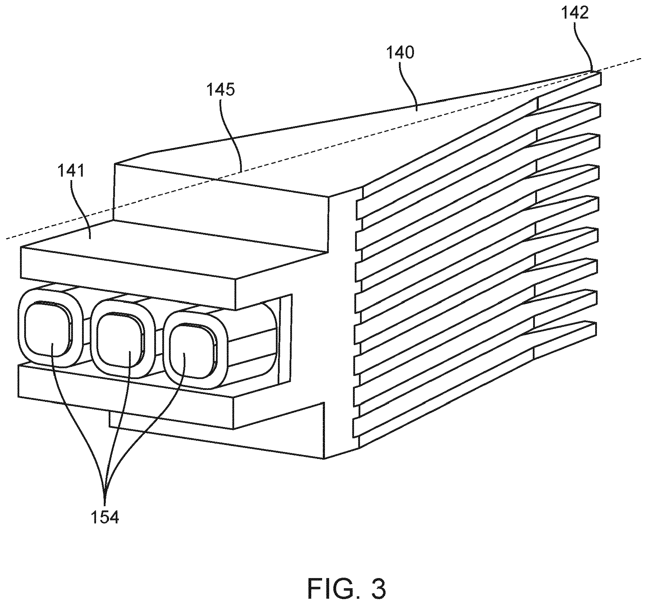

For example, as shown in FIGS. 2 and 3, the linear motor 150 may include a linear stepper motor. The linear stepper motor may include a permanent alternating magnet 152 fixed to the drive base 110 and extending parallel to the one or more rails 130. For example, the permanent alternating magnet 152 may alternate polarities along a length of the permanent alternating magnet 152. Further, the permanent alternating magnet 152 may be located adjacent to the proximal end 141 of the actuator arm 140. For example, the permanent alternating magnet 152 may be spaced apart from the proximal end 141 of the actuator arm 140 by a distance of greater than or equal to about 0.4 millimeters, greater than or equal to about 0.6 millimeters, greater than or equal to about 0.8 millimeters, etc. and/or less than or equal to about 1.5 millimeters, less than or equal to about 1.2 millimeters, less than or equal to about 1 millimeter.

As shown in FIG. 3, the linear motor 150 may also include two or more dynamic magnets 154 (e.g., electromagnets) that interact with the permanent alternating magnet. For example, the system 100 may send a signal to the dynamic magnets 154 to change polarity (or, e.g., to switch on and off) such that the dynamic magnets 154 move along the permanent alternating magnet 152 (e.g., due to attraction/repellant forces formed therebetween). The dynamic magnets 154 may be coupled to the proximal end 141 of the actuator arm 140 to move the actuator arm 140 relative to the permanent alternating magnet 152 and, e.g., along the one or more rails 130. The linear motor 150 may include any suitable number of dynamic magnets 154 (e.g., two or more). As shown in FIG. 3, the linear motor 150 may include three dynamic magnets 154. The dynamic magnets 154 may be spaced apart from the permanent alternating magnet 152 by a distance of greater than or equal to about 0.4 millimeters, greater than or equal to about 0.6 millimeters, greater than or equal to about 0.8 millimeters, etc. and/or less than or equal to about 1.5 millimeters, less than or equal to about 1.2 millimeters, less than or equal to about 1 millimeter. It is noted that, in one or more embodiments, the permanent alternating magnet 152 may be located on the actuator arm 140 (e.g., at the proximal end) and the dynamic magnets 154 may be spaced apart from the proximal end 141 of the actuator arm 140 and parallel to the one or more rails 130. In other words, the permanent alternating magnet 152 and the dynamic magnets 154 may be in any suitable arrangement.

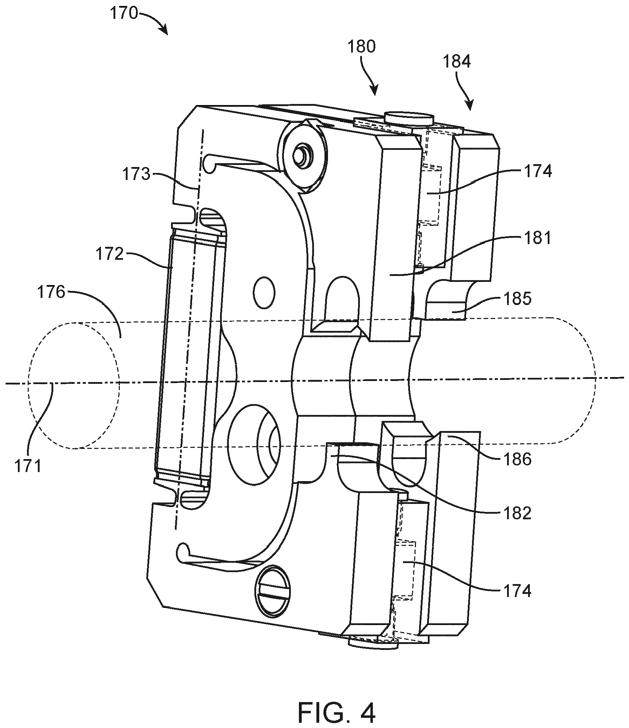

In one or more embodiments, the linear motor 150 may include an inchworm motor 170, e.g., as shown in FIG. 4. The inchworm motor 170 may be coupled to an actuator arm (not shown in FIG. 4) to move the actuator arm linear relative to the recording medium. For example, the inchworm motor 170 may be movably coupled to a shaft 176 (shown in broken lines to fully illustrate inchworm motor 170) that extends along a longitudinal axis 171. The shaft 176 may be fixedly coupled to the drive base. In one or more embodiments, the actuator arm may be movably coupled to one or more rails (e.g., similar to rails 136, 138 shown in FIG. 2), which extend parallel to the longitudinal axis 171 and provide additional support to the actuator arm. As the inchworm motor 170 moves along the shaft 176, the actuator arm coupled to the inchworm motor 170 also moves linear along the longitudinal axis 171.

The inchworm motor 170 may move relative to the shaft 176 in response to movement of actuators of the inchworm motor 170. For example, the inchworm motor 170 may include a variety of different types of actuators (e.g., actuation technologies) including, e.g., piezos, shape memory alloys (SMA), electrostatics, bi-metallics, etc. In one or more embodiments, the inchworm motor 170 may include one or more lateral actuators 174 that extend and retract in a direction along the longitudinal axis 171 and clutch actuators that extend and retract in a direction perpendicular to the longitudinal axis 171. Specifically, the inchworm motor 170 may include a first grip 180 corresponding to a first clutch actuator 172 and a second grip 184 corresponding to a second clutch actuator (not shown, but operates on the respective grip similar to the first clutch actuator 172). When the first clutch actuator 172 extends (e.g., along axis 173), fingers 181, 182 of the first grip 180 move closer together to contact the shaft 176 and restrict movement of the shaft 176. When the first clutch actuator 172 retracts (e.g., along axis 173), the fingers 181, 182 of the first grip 180 move farther apart to space away from the shaft 176 such that the shaft 176 may move relative thereto. Similarly, when the second clutch actuator extends, fingers 185, 186 of the second grip 184 move closer together to contact the shaft 176 and restrict movement of the shaft 176, and when the second clutch actuator retracts, the fingers 185, 186 of the second grip 184 move farther apart to space away from the shaft 176 such that the shaft 176 may move relative thereto. Further, the one or more lateral actuator 174 may expand to move the first and second grips 180, 184 apart from one another and retract to move the first and second grips 180, 184 closer to one another.

For the inchworm motor 170 to move relative to the shaft 176, the actuators may act in a specific sequence to create linear movement along the shaft 176. The process starts by actuating the clutch actuator farthest from the desired movement direction. For example, first clutch actuator 172 may extend such that the first grip 180 contacts and restricts movement of the shaft 176. Next, the lateral actuator 174 extends to move the first grip 180 relative to the second grip 184 to increase the distance therebetween. The second clutch actuator may then extend such that the second grip 184 contacts and restricts movement of the shaft 176, and the first clutch actuator 172 may retract to release contact of the first grip 180 with the shaft 176. Then, the lateral actuator 174 retracts to move the first grip 180 relative to the second grip 184 to decrease the distance therebetween. Thereafter, the first clutch actuator 172 may extend such that the first grip 180 contacts and restricts movement of the shaft 176, and the second clutch actuator may retract to release contact of the second grip 184 with the shaft 176. This process is repeated multiple times to move the inchworm motor 170 (and the actuator arm attached thereto) relative to the shaft 176 in a direction from the first grip 180 to the second grip 184. In order to move in the opposite direction, the first and second clutch actuators may be swapped in the process above.

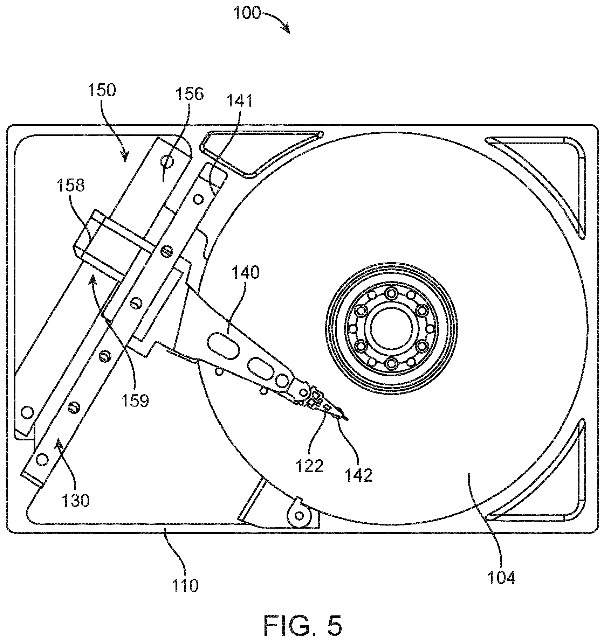

In one or more embodiments, the linear motor 150 may include a linear voice coil motor, e.g., as shown in FIG. 5. For example, the linear voice coil motor may include a permanent alternating magnet 156 (e.g., similar to the permanent alternating magnet 152) fixed to the drive base 110 and extending parallel to the one or more rails 130. For example, the permanent alternating magnet 156 may alternate polarities along a length of the permanent alternating magnet 156. Further, the permanent alternating magnet 156 may be located adjacent to the proximal end 141 of the actuator arm 140. For example, the permanent alternating magnet 156 may be spaced apart from the proximal end 141 of the actuator arm 140 by a distance of greater than or equal to about 1 millimeter, greater than or equal to about 2 millimeters, greater than or equal to about 3 millimeters, etc. and/or less than or equal to about 5 millimeters, less than or equal to about 4 millimeters, less than or equal to about 3.5 millimeters.

The linear voice coil motor may also include a voice coil 158 that interacts with the permanent alternating magnet 156. For example, the system 100 may send a signal to the voice coil 158 to change polarity such that the voice coil 158 moves along the permanent alternating magnet 156 (e.g., due to attraction/repellant forces formed therebetween). The voice coil 158 may be coupled to the proximal end 141 of the actuator arm 140 to move the actuator arm 140 relative to the permanent alternating magnet 156 and, e.g., along the one or more rails 130. As such, the at least one head 122 positioned on the distal end 142 of the actuator arm 140 moves in a straight line radially on the recording medium 104. Furthermore, the voice coil 158 may encircle the permanent alternating magnet 156 (e.g., the voice coil 158 defining an opening 159 through which the permanent alternating magnet 156 extends). It is noted that in one or more embodiments, the permanent alternating magnet 156 may be located on the actuator arm 140 (e.g., at the proximal end 141) and the voice coil 158 may be spaced apart from the proximal end 141 of the actuator arm 140 and defining an opening parallel to the one or more rails 130. For example, the moving part may be either the voice coil 158 or the permanent alternating magnet 156. In other words, the permanent alternating magnet 156 and the voice coil 158 may be in any suitable arrangement.

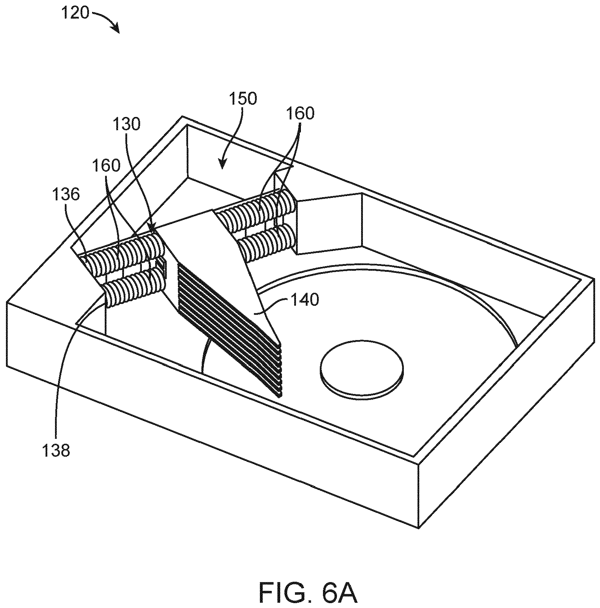

In one or more embodiments, the data storage device 100 may also include bellows 160 covering the one or more rails 130, e.g., as shown in FIG. 6A. The bellows 160 may be adapted to provide a seal of the one or more rails 130 as the actuator arm 140 moves along the one or more rails 130. The bellows 160 may be used to prevent contamination created by the interaction between the actuator arm 140, the one or more rails 130, and the linear motor 150. The bellows 160 may include (e.g., be formed of) any suitable materials. For example, the bellows 160 may include tin, chrome, nickel, polyurethane, combination of materials with clean room safe coatings (e.g., tin, nickel, chrome, etc.), etc. The portions of the first and second rails 136, 138 not actively coupled to the actuator arm 140 may be covered by bellows 160. For example, as shown in FIG. 6A, the data storage device 100 may include four separate bellows located on, e.g., either side of the actuator arm 140 for each of the rails. It is noted that bellows 160 may be provided at any suitable portion of the data storage device 100 to prevent interface contamination created by the linear actuator assembly 120.

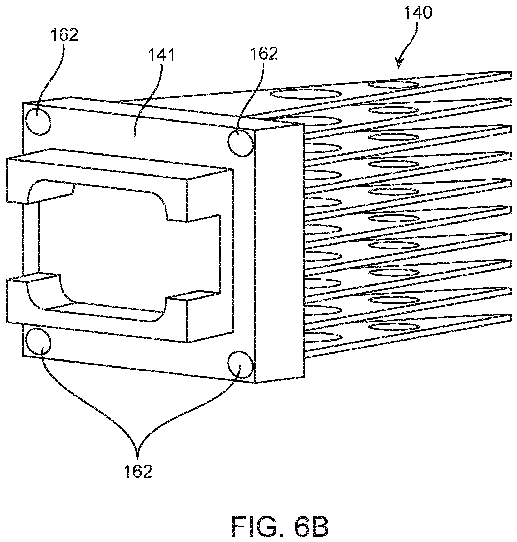

Furthermore, in one or more embodiments, the data storage device 100 may include contamination confining magnets 162 that also may serve to bias and load the bearings, e.g., as shown in FIG. 6B. For example, the magnets 162 may be coupled to the proximal end 141 of the actuator arm 140 and may interact with (e.g., contact) the one or more rails 130. Specifically, the magnets 162 may help to pre-load the bearing to reduce hysteresis. In one or more embodiments, the magnets 162 may also trap any steel particles that may be shed by the bearing, thereby reducing contamination. The device 100 may include any suitable number of magnets 162. As shown in FIG. 6B, the actuator arm 140 includes four magnets 162 located at each corner of the proximal end 141.

Additionally, in one or more embodiments, the linear actuator assembly 120 may include two linear actuators that operate in combination. For example, the distal ends 142 of each of the actuator 140 arms may be connected and adapted to operate together (e.g., each moves linearly at the same pace). The at least one head 122 may be positioned at the intersection of the two actuator arms (e.g., at the distal ends 142). By connecting two opposing actuator arms, the suspensions of the opposing actuator arms may define a thinner thickness relative to a typical cantilevered suspension. As such, the thinner suspension may produce less drag and/or reduce disk to disk spacing and, therefore, may make the data storage device more efficient. Additionally, this configuration may provide more stiffness for robustness to shock events and achieving active control of head media spacing at the suspension.

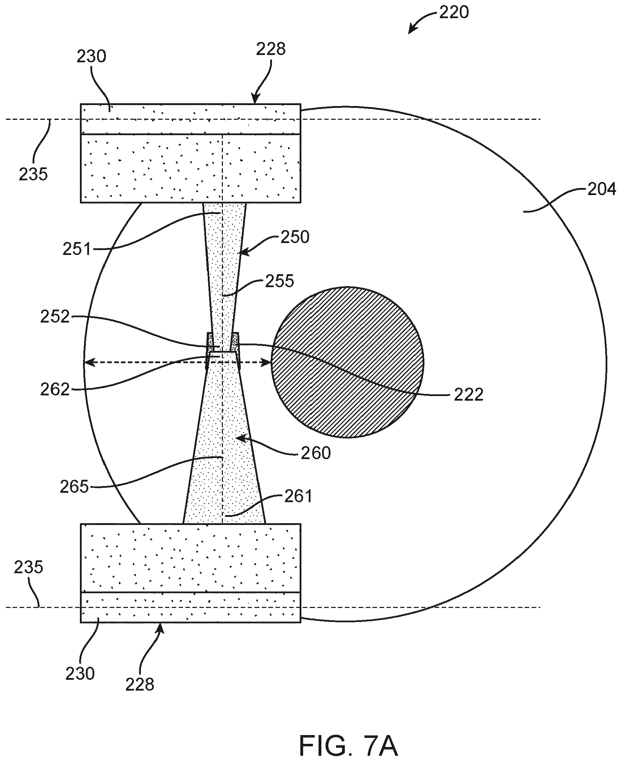

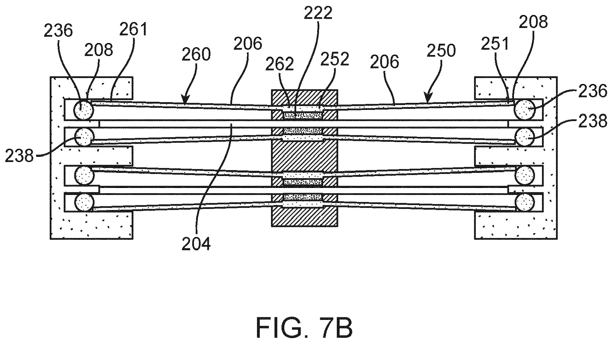

As shown in FIGS. 7-9, the linear actuator assembly 220 may include two actuator arms positioned within the physical boundaries of the data storage device 200 and adapted to move linearly. For example, the linear actuator assembly 220 may include a first actuator arm 250 extending along a first actuator axis 255 between a proximal end 251 and a distal end 252, and a second actuator arm 260 extending along a second actuator axis 265 between a proximal end 261 and a distal end 262. The distal end 252 of the first actuator arm 250 may be connected to the distal end 262 of the second actuator arm 260. In other words, instead of the distal end of the actuator arm being cantilevered and not supported, the second actuator arm 260 may help to support the first actuator arm 250, and vice versa.

The linear actuator assembly 220 may also include a linear motor 228 associated with each of the first and second actuator arms 250, 260. Each of the corresponding linear motors 228 may be positioned adjacent to the respective actuator arm 250, 260 (e.g., proximate the proximal end 252, 262) and adapted to move the respective actuator arm 250, 260. The linear motor 228 may include any suitable motor such as, e.g., the linear motors described herein as they relate to FIGS. 2-5. For example, the linear motor 228 may include a linear stepper motor, an inchworm motor, a linear voice coil motor, etc. Further, the linear motor 228 may be configured or arranged as described herein.

Additionally, the linear actuator assembly 220 may include one or more rails 230 associated with each of the first and second actuator arms 250, 260. The one or more rails 230 may operate and be arranged similar to as described with respect to FIGS. 1-5. Each of the one or more rails 230 may extend along a rail axis 235 between a first end and a second end. Further, the corresponding rail axis 235 may be at an angle to the respective actuator axis 255, 265 (i.e., the rail axis 235 may not be parallel to the actuator axis 255, 265). Further, the respective actuator may be movably attached to the corresponding one or more rails 230 such that the actuator arm is restricted to linear motion along the one or more rails 230. Also, for example, each of the one or more rails 230 may include a first rail 236 and a second rail 238, and the actuator arm may be positioned between the first and second rails 236, 238.

Furthermore, each of the first and second actuator arms 250, 260 may include a base 208 and a suspension 206. The base 208 may be located proximate the proximal end 251, 261 of the actuator arm 250, 260 and may be adapted to interact with the respective linear motor 228. The at least one head 222 may be located proximate the distal ends 252, 262 of each of the actuator arms 250, 260 and may be adapted to read and write data from and to a recording medium 204. The suspension 206 may extend between the base 208 and the at least one head 222. Further, the suspension 206 may define a thickness of less than or equal to about 2 millimeters, less than or equal to about 1.5 millimeters, less than or equal to about 1 millimeter, less than or equal to about 0.5 millimeters, etc. As described herein, because the distal ends 252, 262 of the actuator arms 250, 260 are connected and supported at two locations, the suspension 206 may define a smaller thickness than a typical cantilevered actuator arm.

Specifically, as shown in FIGS. 7A and 7B, the linear actuator assembly 220 may include a first actuator arm 250 and a second actuator arm 260 extending from across a recording medium 204 from the first actuator arm 250. Further, the linear actuator assembly 220 may include a first linear motor 227 corresponding to the first actuator arm 250 and a second linear motor 229 corresponding to the second actuator arm 260. The first linear motor 227 may be positioned on one side of the recording medium 204 and the second linear motor 229 may be positioned on the other side of the recording medium 204 such that the recording medium 204 is located between the first and second linear motors 227, 229. The first rail axis 231 may extend parallel to the second rail axis 232 such that the first and second actuator arms 250, 260 can move in coordination with each other. Further, an actuator axis 255 of the first actuator arm 250 may be at a 90 degree angle to the first rail axis 231 and the actuator axis 265 of the second actuator arm 260 may be at a 90 degree angle to the second rail axis 232. Further yet, the actuator axis 255 of the first actuator arm 250 and the actuator axis 265 of the second actuator arm 260 may be parallel to one another. For example, the actuator axis 255 of the first actuator 250 and the actuator axis 265 of the second actuator 260 may be aligned with one another.

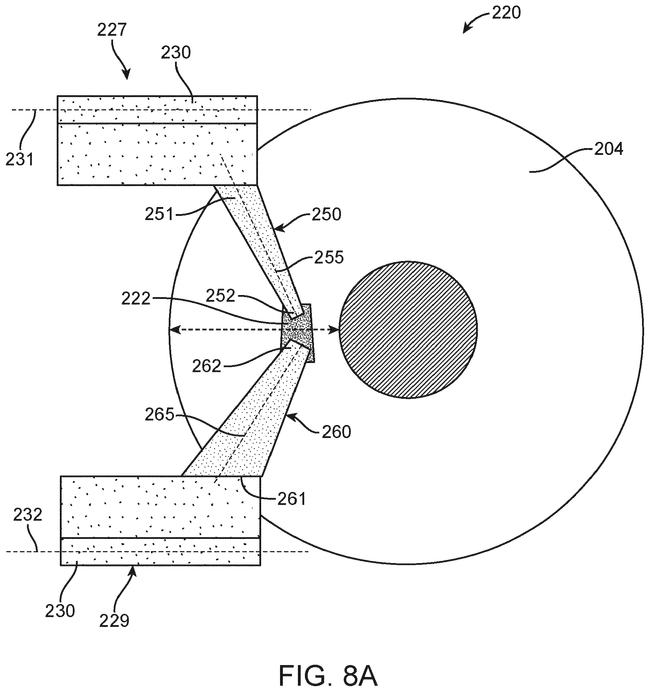

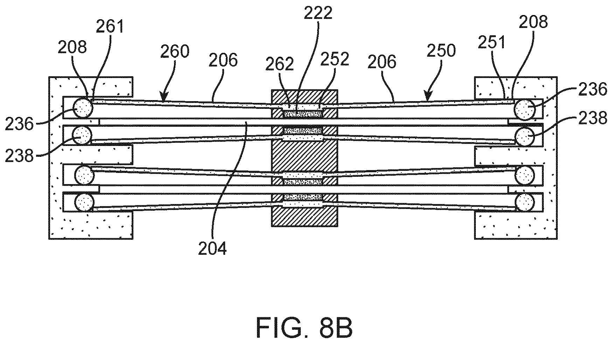

The linear actuator assembly 220 shown in FIGS. 8A and 8B is similar to the linear actuator assembly 220 of FIGS. 7A and 7B, but the first and second actuator arms 250, 260 are positioned at a non-right angle to the one or more rails 230. For example, the first and second actuator arms 250, 260 (e.g., the actuator axes 255, 265 of each) may be arranged at an angle to the rail axes 231, 232 of about 35 degrees, 45 degrees, 55 degrees, etc. By using this angle between the one or more rails 230 and the actuator arms 250, 260, the linear motors 227, 229 and one or more rails 230 may be offset from the recording medium 204. For example, the linear motors 227, 229 and the one or more rails 230 may be positioned to the side of the recording medium 204 such that there is no overlap with the recording medium 204 when projected from the top.

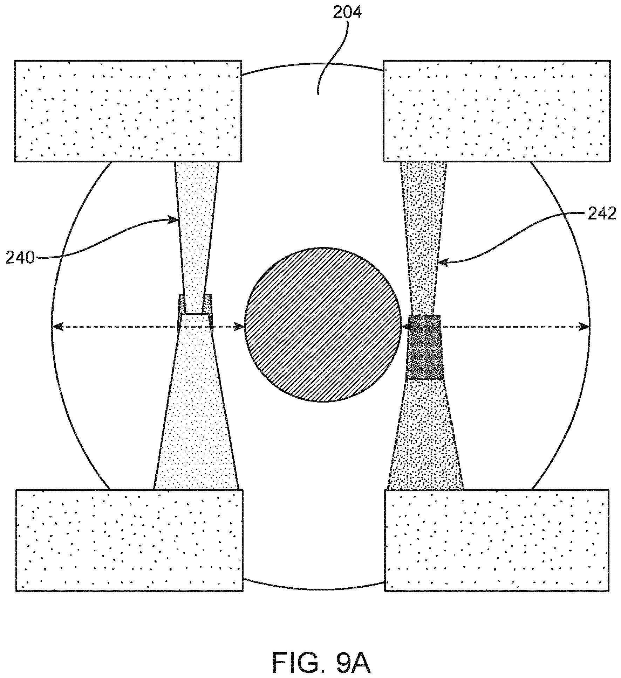

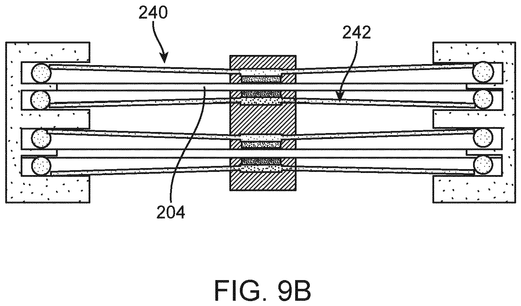

Further, another embodiment is shown in FIGS. 9A and 9B that includes four actuator arms. One pair of actuator arms 240 may be positioned on a top side of the recording medium 204 and the other pair of actuator arms 242 may be positioned on a bottom side of the recording medium 204, offset from the first pair of actuator arms 240. As such, the upper and lower heads may be on different pairs of actuator arms 240, 242 (e.g., as compared to having upper and lower heads on the same pair of actuator arms) such that the disk to disk spacing may be further reduced (e.g., because there may be only one head per suspension between disks). Furthermore, the different pairs of actuator arms may independently access different radii of the disk at the same time.

In the preceding description, reference is made to the accompanying set of drawings that form a part hereof and in which are shown by way of illustration several specific embodiments. It is to be understood that other embodiments are contemplated and may be made without departing from (e.g., still falling within) the scope or spirit of the present disclosure. The preceding detailed description, therefore, is not to be taken in a limiting sense. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The recitation of numerical ranges by endpoints includes all numbers subsumed within that range (e.g., 1 to 5 includes 1, 1.5, 2, 2.75, 3, 3.80, 4, and 5) and any range within that range.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise. As used herein, "or" is generally employed in its sense including "and/or" unless the content clearly dictates otherwise. As used herein, "have," "having," "include," "including," "comprise," "comprising," or the like are used in their open-ended sense, and generally mean "including, but not limited to."

Embodiments of the systems, apparatus, and methods associated therewith are disclosed. The implementations described above and other implementations are within the scope of the following claims. One skilled in the art will appreciate that the present disclosure can be practiced with embodiments other than those disclosed. The disclosed embodiments are presented for purposes of illustration and not limitation, and the present disclosure is limited only by the claims that follow.

## Claims

1. An apparatus comprising:
an actuator arm extending along an actuator axis between a proximal end and a distal end;
one or more rails extending along a rail axis between a first end and a second end, wherein the rail axis is at an angle to the actuator axis, wherein the actuator arm is movably attached to the one or more rails such that the actuator arm is restricted to linear motion along the one or more rails; and
a linear motor positioned adjacent to the actuator arm and adapted to move the actuator arm.

2. The apparatus of claim 1, wherein the one or more rails comprise a first rail and a second rail, wherein the actuator arm is positioned between the first and second rails.

3. The apparatus of claim 1 or 2, wherein the linear motor comprises a linear stepper motor, or an inchworm motor, or a linear voice coil motor.

4. The apparatus of any preceding claim, further comprising a bellows covering the one or more rails and adapted to provide a seal of the one or more rails as the actuator arm moves along the one or more rails.

5. A system comprising:
a drive base;
a spindle attached to the drive base;
a recording medium rotatably coupled to the spindle;
an actuator arm extending along an actuator axis between a proximal end and a distal end, the actuator arm comprising at least one head for reading and writing data from and to the recording medium;
one or more rails extending along a rail axis between a first end and a second end, wherein the rail axis is at an angle to the actuator axis, wherein the actuator arm is movably attached to the one or more rails such that the actuator arm is restricted to linear motion along the one or more rails; and
a linear motor positioned adjacent to the actuator arm and adapted to move the actuator arm.

6. The system of claim 5, wherein the at least one head is adapted to move along a radial line relative to the recording medium.

7. The system of claim 5 or 6, wherein the one or more rails comprise a first rail and a second rail, wherein the actuator arm is positioned between the first and second rails.

8. The system of any of claims 5 to 7, wherein the linear motor comprises a linear stepper motor, or an inchworm motor, or a linear voice coil motor.

9. An apparatus comprising:
a first actuator arm extending along a first actuator axis between a proximal end and a distal end;
a second actuator arm extending along a second actuator axis between a proximal end and a distal end, wherein the distal end of the first actuator arm is connected to the distal end of the second actuator arm;
at least one head located proximate the distal ends of each of the first and second actuator, the at least one head adapted to read and write data from and to a recording medium; and
a linear motor associated with each of the first and second actuator arms and positioned adjacent to the proximal end of the respective actuator arm and adapted to move the respective actuator arm,
wherein each of the first and second actuator arms comprise:
a base located proximate the proximal end and adapted to interact with the respective linear motor, and
a suspension extending between the base and the at least one head,
wherein the suspension defines a thickness of less than 1 millimeter.

10. The apparatus of claim 9, further comprising one or more rails associated with each of the first and second actuator arms, wherein each of the one or more rails extends along a rail axis between a first end and a second end, wherein the rail axis is at an angle to the respective actuator axis, wherein the respective actuator arm is movably attached to the corresponding one or more rails such that the actuator arm is restricted to linear motion along the one or more rails.

11. The apparatus of claim 9 or 10, wherein the first and second actuator axes are positioned at an angle to one another.

12. The apparatus of claim 9 to 10, wherein the first and second actuator axes are parallel to one another.

13. The apparatus of any of claims 9 to 12, wherein the one or more rails comprise a first rail and a second rail, wherein the actuator arm is positioned between the first and second rails.

14. The apparatus of any of claims 9 to 13, wherein the linear motor comprises a linear stepper motor, or an inchworm motor, or a linear voice coil motor.
